# EUROPEAN PATENT APPLICATION

(11) **EP 2 804 126 A1**
(43) Date of publication of application: **19.11.2014**
(21) Application number: 14168101.5
(22) Date of filing: 13.05.2014
(51) Int. Cl.: G06F 21/88

(54) **Detection of loss and automatically locking of a mobile device**

(30) Priority: 14.05.2013 KR 20130054550
(71) Applicant: Samsung Electronics Co., Ltd, Gyeonggi-do 443-742 (KR)
(72) Inventor: Choi, Bokun, 443-742 Gyeonggi-do (KR); Kim, Junghoon, 443-742 Gyeonggi-do (KR); Namgoong, Boram, 443-742 Gyeonggi-do (KR); Roh, Byoungtack, 443-742 Gyeonggi-do (KR); Park, Jihyun, 443-742 Gyeonggi-do (KR); Lee, Youngjin, 443-742 Gyeonggi-do (KR)
(74) Representative: Gover, Richard Paul

(57) **Abstract**

A method for securing an electronic device is provided. The method includes determining if the device is being carried or has been left behind and accordingly setting a security level of the electronic device. The electronic device includes a series of sensors for determining if it is being carried or left behind, equivalent of being lost and probably stolen, such as pressure, grip, gravity or acceleration sensors. Conditions on the changes of the sensed magnitudes are defined to indicate if the device is borne or left behind, such as stability or time duration of variations of the magnitude. The security levels define a series of policies and steps for locking and unlocking the device in the different device states.

## Description

### TECHNICAL FIELD

The present disclosure relates generally to a security method and an electronic device implementing the same, and more particularly, to a method of displaying a locking image corresponding to a security level set in an electronic device and unlocking the electronic device through the locking image, and an electronic device implementing the same.

### BACKGROUND

An electronic device, for example, a smart phone or a tablet Personal Computer (PC) provides, to users, various functions including a game, internet and a telephone call, and various pieces of content including an e-mail, a moving image, a photo and a contact address. However, any private information displayed on a screen may cause security issues or difficult situations. Thus, the electronic device provides a locking function for information security. For example, if a user presses a power ON button installed on a side surface of the electronic device, a locking image (what is called, a login image) is displayed on the screen of the electronic device. When the user inputs a password to the electronic device, the electronic device is unlocked and the user can use the electronic device. In other words, the user inputs a password to log in to the electronic device. If the electronic device is unlocked, all people may use the electronic device. That is, all settings and personal information of the electronic device may be displayed, and applications installed in the electronic device may be executed.

Meanwhile, an automatic locking function is generally set for the electronic device. That is, when there is no user input for a predetermined period of time (e.g., one minute), the electronic device enters into a locking mode. When a user waits for a response message of a counterpart while listening to music or using an instant messenger, the user stops use of the electronic device for a while. Accordingly, the electronic device enters into the locking mode and the screen is switched off. The user should repeatedly input the password in order to use the electronic device again.

### SUMMARY

A method of operating an electronic device having at least one sensor for measuring a physical quantity is provided. The method includes determining a current status of the electronic device using a sensor, wherein the current status is one of a status of being carried and a status of being left, and adjusting a security level of the electronic device, based on the current status of the electronic device.

In some embodiments, setting the security level comprises setting a higher security level for the status of being carried, or setting a lower security level for the status of being left.

In some embodiments, the at least one sensor comprises at least one of a grip sensor and a pressure sensor.

In some embodiments, the status of being left is selected when the measured physical quantity has not been changed for a threshold time.

In some embodiments, the at least one sensor comprises at least one of a gravity sensor and an acceleration sensor.

In some embodiments, the status of being carried is selected when the measured physical quantity has been continuously changed.

In some embodiments, once the current status is set to be the status of being left, the security level maintains to be the higher security level until a user releases the higher security level.

In some embodiments, for the higher security level, providing a plurality of lock-screens having different passwords in a sequence after each lock-screen is successfully unlocked.

In some embodiments, the plurality of lock-screens requires different formats of the passwords.

In some embodiments, for the lower security level, displaying a prior screen before being locked when a single lock-screen is successfully unlocked.

An electronic device includes at least one sensor for measuring a physical quantity, and a processor configured to determine a security level of the electronic device, the security level comprising one of a high security level and a low security level, and adjust a security level of the electronic device, based on the current status of the electronic device.

In some embodiments, the processor is configured to, for the higher security level, provide a plurality of lock-screens having different passwords in a sequence after each lock-screen is successfully unlocked.

In some embodiments, the processor is, for the lower security level, cause a screen to display a prior screen before being locked when a single lock-screen is successfully unlocked.

As described above, the present disclosure provides a security method and an electronic device, which can maintain security and provide convenience to users by diversely setting a security level of the electronic device according to a service status of the electronic device.

Before undertaking the DETAILED DESCRIPTION below, it may be advantageous to set forth definitions of certain words and phrases used throughout this patent document: the terms "include" and "comprise," as well as derivatives thereof, mean inclusion without limitation; the term "or," is inclusive, meaning and/or; the phrases "associated with" and "associated therewith," as well as derivatives thereof, may mean to include, be included within, interconnect with, contain, be contained within, connect to or with, couple to or with, be communicable with, cooperate with, interleave, juxtapose, be proximate to, be bound to or with, have, have a property of, or the like; and the term "controller" means any device, system or part thereof that controls at least one operation, such a device may be implemented in hardware, firmware or software, or some combination of at least two of the same. It should be noted that the functionality associated with any particular controller may be centralized or distributed, whether locally or remotely. Definitions for certain words and phrases are provided throughout this patent document, those of ordinary skill in the art should understand that in many, if not most instances, such definitions apply to prior, as well as future uses of such defined words and phrases.

### BRIEF DESCRIPTION OF THE DRAWINGS

For a more complete understanding of the present disclosure and its advantages, reference is now made to the following description taken in conjunction with the accompanying drawings, in which like reference numerals represent like parts:
FIG. 1 is a block diagram of an electronic device according to an embodiment of the present disclosure;
FIG. 2 is a flowchart illustrating an environment setting method according to an embodiment of the present disclosure;
FIGS. 3 and 4 are screens illustrating the environment setting method according to the embodiment of the present disclosure;
FIG. 5 is a flowchart illustrating a security setting method according to an embodiment of the present disclosure;
FIG. 6 is a flowchart illustrating a security setting method according to another embodiment of the present disclosure;
FIG. 7 is a flowchart illustrating an unlocking method according to an embodiment of the present disclosure;
FIGS. 8 and 11 are screens illustrating the unlocking method according to the embodiment of the present disclosure;
FIG. 12 is a flowchart illustrating an unlocking method according to another embodiment of the present disclosure; and
FIG. 13 is a flowchart illustrating an unlocking method according to another embodiment of the present disclosure.

### DETAILED DESCRIPTION

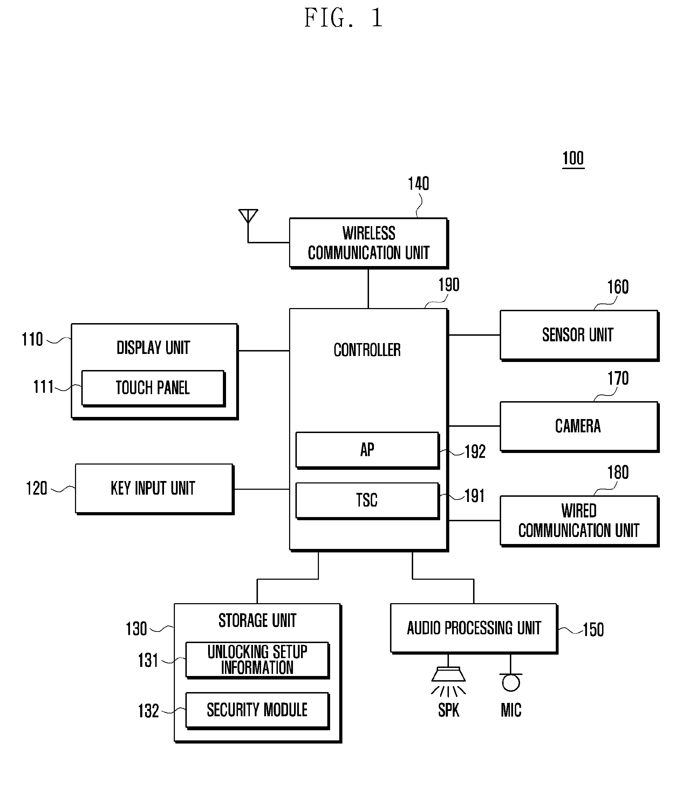

FIGURES 1 through 13, discussed below, and the various embodiments used to describe the principles of the present disclosure in this patent document are by way of illustration only and should not be construed in any way to limit the scope of the disclosure. Those skilled in the art will understand that the principles of the present disclosure may be implemented in any suitably arranged electronic devices. A security method according to the present disclosure may be implemented in an electronic device. An electronic device according to the present disclosure may include, for example, a smart phone, a tablet Personal Computer (PC), a notebook PC, a digital camera, a smart Television (TV), a Personal Digital Assistant (PDA), an electronic organizer, a desktop PC, a Portable Multimedia Player (PMP), a media player (e.g., an MP3 player), an acoustic device, a smart watch, a game terminal, and the like. Further, the electronic device according to the present disclosure may include a home appliance (e.g., a refrigerator, a TV, a washing machine) having a touch screen.

Hereinafter, the security method and the electronic device according to the present disclosure will be described in detail. Prior to detailed descriptions of the present disclosure, terms and words used herein should not be construed as limited to typical or dictionary meanings, but should be construed as meanings and concepts coinciding with the spirits of the present disclosure. Accordingly, since the descriptions and the accompanying drawings are merely exemplary embodiments of the present disclosure and do not represent all the spirits of the present disclosure, it should be understood that there may be various equivalents and modified embodiments capable of replacing them at the time of filing the present application. Further, in the accompanying drawings, some elements may be exaggerated, omitted, or schematically illustrated, and the size of each element may not precisely reflect the actual size. Accordingly, the present disclosure is not restricted by a relative size or interval illustrated in the accompanying drawings. In describing the present disclosure, detailed descriptions related to well-known functions or configurations will be omitted when they may make subject matters of the present disclosure unnecessarily obscure.

FIG. 1 is a block diagram of an electronic device according to an embodiment of the present disclosure.

Referring to FIG. 1, the electronic device 100 according to the embodiment of the present disclosure includes a display unit 110, a key input unit 120, a storage unit 130, a wireless communication unit (transceiver) 140, an audio processing unit 150, a speaker SPK, a microphone MIC, a sensor unit 160, a camera 170, a wired communication unit 180, and a controller 190.

The display unit 110 displays data on a screen under control of the controller 190, particularly, an Application Processor (AP). Namely, when the controller 190 processes (e.g., decodes and resizes) data and stores the processed data in a memory (e.g., a frame buffer), the display unit 110 can convert the data stored in the frame buffer to an analog signal and display the converted data on the screen. When power is supplied to the display unit 110, the display unit 110 can display a locking image on the screen. When unlocking information is detected while the locking image is being displayed, the controller can release locking. Namely, the display unit 110 can display another image instead of the locking image under the control of the controller 190. Here, the unlocking information can be a text (e.g., "1234") that a user inputs to the electronic device 100 by using a keypad displayed on the screen or the key input unit 120, a trace of a user gesture (e.g., a drag) or a direction of the user gesture on the display unit 110, a user's voice data input to the electronic device 100 through the microphone MIC, or a user's image data input to the electronic device 100 through the camera. Meanwhile, another image can be a home image, an application execution image, or the like. The home image can include a background image and a plurality of icons displayed thereon. Here, the icons indicate the respective applications or content (e.g., a photo file, a video file, a recorded file, a document, a message, and the like). When a user selects one of the icons, for example, an application icon (e.g., taps an icon corresponding to a web browser), the controller 190 can execute a corresponding application and control the display unit 110 to display an execution image (e.g., a web page) of the corresponding application. The display unit 110 can display the background image (e.g., a photo set by a user, an image designated as a default, an image downloaded from the outside, and the like) under the control of the controller 190. The display unit 110 can display at least one foreground image (e.g., a web page, a keypad, a moving image, a menu related to a music player, or the like) on the background image under the control of the controller 190.

The display unit 110 can display images in a multi-layer structure on the screen under the control of the controller 190. For example, the display unit 110 displays a first image (e.g., a home image or a web page) on the screen and displays a second image (e.g., a moving image) on the first image. At this time, an area where the first image is displayed can correspond to a full screen and an area where the second image is displayed can correspond to a partial screen. Thus, a user can view a portion of the first image but not the whole of the first image. Further, the display unit 110 can also semi-transparently display the second image under the control of the controller 190. Accordingly, the user can also view the whole of the first image.

In a case of specific content, for example, a moving image, the display unit 110 can always display the specific content on a top layer of the screen under the control of the controller 190. For example, a web browser is executed by a user and then, a web page is displayed on the screen according to the execution of the web browser. At this time, the controller 190 can control the display unit 110 to display the moving image on a layer higher than that of the web page. Further, the display unit 110 can display a first image (e.g., a moving image) in a first area of the screen, and can display a second image (e.g., a keypad, a message, a notification window, or the like) in a second area not overlapping the first area under the control of the controller 190.

The display unit 110 can be configured with a Liquid Crystal Display (LCD), an Organic Light Emitted Diode (OLED), an Active Matrix Organic Light Emitted Diode (AMOLED), a transparent display, or a flexible display.

A touch panel 111 is installed on the screen of the display unit 110. For example, the touch panel 111 can be implemented as an add-on type in which the touch panel 111 is located on the screen of the display unit 110, or an on-cell type or in-cell type in which the touch panel 111 is inserted into the display unit 110.

The touch panel 111 can generate input signal indicating e.g., an access event, a hovering event, a touch event, or the like) in response to touch gestures (e.g., a touch, a tap, a drag, a flick, or the like) of a pointing device (e.g., a finger or a pen) on the screen of the display unit 110, namely, on the touch screen, and can convert the input signal into a digital signal to transfer the converted digital signal to the controller 190, particularly, to a touch screen controller. When the pointing device accesses the touch screen, the touch panel 111 generates an access event in response to the access of the pointing device. The access event can include information representing a movement and a direction of the pointing device. When the pointing device hovers over the touch screen, the touch panel 111 generates a hovering event in response to the hovering of the pointing device and transfers the hovering event to, for example, the touch screen controller. Here, the hovering event can include raw data, for example, one or more coordinates (x, y). When the pointing device touches the touch screen, the touch panel 111 generates a touch event in response to the touch of the pointing device. Here, the touch event can include raw data, for example, one or more coordinates (x, y).

The touch panel 111 can be a complex touch panel including a hand touch panel for detecting a hand gesture and a pen touch panel for detecting a pen gesture. Here, the hand touch panel is configured as a capacitive type. Of course, the hand touch panel can also be configured as a resistive type, an infrared type, or an ultrasonic wave type. Further, the hand touch panel can generate a touch event not only by a user's hand gesture but also by another object (e.g., a conductive object capable of causing a change in electrostatic capacity). The pen touch panel can be configured as an electromagnetic induction type. Accordingly, the pen touch panel generates a touch event by a stylus pen for a touch that is specially manufactured to form a magnetic field. The pen touch panel can also generate a key event. For example, when a key provided to a pen is pressed, a magnetic field caused by a coil of the pen varies. The pen touch panel can generate a key event in response to a change of the magnetic field and can transfer the key event to the controller 190, particularly, the touch screen controller.

The key input unit 120 can include a plurality of keys for receiving number or text information and setting various functions. The keys can include a menu load key, a screen on/off key, a power on/off key, a volume control key, and the like. The key input unit 120 generates a key event related to user settings and function control of the electronic device 100 and transfers the key event to the controller 190. The key event can include a power on/off event, a volume control event, a screen on/off event, a shutter event, and the like. The controller 190 controls the aforementioned configurations in response to the key event. Meanwhile, the key of the key input unit 120 can be referred to as a hard key and the virtual key displayed on the display unit 110 can be referred to as a soft key.

The storage unit 130 can store data generated according to an operation of the electronic device 100 or received from an external device (e.g., a server, a desktop PC, a tablet PC, or the like) through the wireless communication unit 140, under the control of the controller 190.

The storage unit 130 can store various setting information for service configurations of the electronic device 100. Accordingly, the controller 190 can operate the electronic device 100 with reference to the setting information. Particularly, by referring to the storage unit 130, the controller 190 can determine a security level based on the sensing information of a sensor that is being monitored in real time. , and can store unlocking setup information 131, as illustrated in Table 1, for mapping the determined security level onto an unlocking method.

**TABLE 1**

| Sensor | Sensing physical quantity | Device Status | Security level | Unlocking method |
|---|---|---|---|---|
| Grip sensor or Pressure sensor | Grip pressure | Being carried: the continuous cha nge of the sensing value (gravity or acceleration) or the sensing value (pressure) larger than or equal to a preset threshold value indicates that user could be continuously carrying or using electronic devic e while carrying it with hand. | Low level | No locking, or simple unlocking method (e.g., slide to unlock) |
| Gravity sensor | Gravity | Being left: no change of the sensing value (gravity or acceleration) or the sensing value (pressure) under a threshold for a preset period of time indicates that the electronic device could be left alone. Thus, it is apprehended that another per son other than a user could use ele ctronic device. | High level | Complex (or multiple stages) unlocking method (e.g., a password and pattern unlock) |
| Acceleration sensor | Acceleration | Normal operation | Intermediate level | User set unlocking method (e.g., password unlock) |

The storage unit 130 can store various programs for operating the electronic device 100, such as a booting program, one or more operating systems, and one or more applications. Particularly, the storage unit 130 can store a security setting module 132 for setting a security level according to a status of the electronic device and displaying a locking image corresponding to the set security level. The security module 132 can be a program set to perform an operation of monitoring a sensor input in real time, an operation of determining a security level with reference to the unlocking setup information 131 when the screen is switched to an OFF state, an operation of determining an unlocking method corresponding to the determined security level, and an operation of displaying a locking image corresponding to the determined unlocking method when the screen is switched to an ON state.

The storage unit 130 can store a speech recognition program, a Speech to Text (STT) program, and a face recognition program. The speech recognition program can detect speech feature information (e.g., a timbre, a frequency, a decibel, and the like) from speech data. The speech recognition program can compare the detected speech feature information with one or more pieces of pre-stored speech feature information, and can recognize a user based on the comparison result. For example, when the detected speech feature information coincides with the stored speech feature information, the controller 190 unlocks the electronic device 100. The STT program converts speech data into texts. The face recognition program recognizes a user's face from an image taken by the camera 170. Specifically, the face recognition program extracts face information from image data, compares the extracted face information with one or more pieces of pre-stored face information, and recognizes a user based on the comparison result. For example, when the extracted face information coincides with the stored face information, the controller 190 can unlock the electronic device 100.

The storage unit 130 can include a main memory and a secondary memory. The main memory can be implemented with, for example, a Random Access Memory (RAM). The secondary memory can be implemented with a disk, a RAM, a Read Only Memory (ROM), a flash memory, or the like. The main memory can store various programs loaded from the secondary memory, such as a booting program, an operating system, and applications. When power of a battery is supplied to the controller 190, the booting program is first loaded in the main memory. The booting program loads the operating system in the main memory. The operating system loads an application (e.g., a security module 132) in the main memory. The controller 190 (e.g., an Application Processor (AP)) accesses the main memory to decipher commands (routines) of a program, and executes a function according to the decipherment result (e.g., security settings). Namely, the various programs are loaded in the main memory to operate as a process.

The wireless communication unit 140 performs a voice call, a video call, or data communication with an external device through a network under the control of the controller 190. The wireless communication unit 140 includes a radio frequency transmitter up-converting and modifying a frequency of a transmitted signal and a radio frequency receiver low-noise amplifying and down-converting a frequency of a received signal. Further, the wireless communication unit 140 can include a mobile communication module (e.g., a 3-Generation mobile communication module, a 3.5-Generation mobile communication module, 4-Generation mobile communication module, or the like), a digital broadcasting module (e.g., a Digital Multimedia Broadcasting (DMB) module), and a short distance communication module (e.g., a Wi-Fi module, a Bluetooth module, and a Near Field Communication (NFC) module).

The audio processing unit 150 combines with the speaker SPK and the microphone MIC, and performs an input and an output of an audio signal (e.g., speech data) for speech recognition, speech recording, digital recording, and a telephone call. The audio processing unit 150 receives an audio signal from the controller 190, converts the received audio signal into an analog signal, amplifies the analog signal, and outputs the amplified signal to the speaker SPK. The audio processing unit 150 converts an audio signal received from the microphone MIC into a digital signal and provides the digital signal to the controller 190. The speaker SPK converts an audio signal received from the audio processing unit 150 into a sound wave and outputs the sound wave. The microphone MIC converts a sound wave transferred from people or other sound sources into an audio signal.

The sensor unit 160 detects a physical quantity (e.g., acceleration, a pressure, an amount of light, and the like) and a change thereof, generates detection information (e.g., a voltage change Δv), and transfers the detection information to the controller 190. The sensor unit 160 includes a gravity sensor, an acceleration sensor, an orientation sensor, a gyroscope, a terrestrial magnetism sensor, a grip sensor, a proximity sensor, a pressure sensor, and the like. Here, the sensors are integrated into one chip or implemented as respective separate chips.

The camera 170 performs a function of taking a picture of a subject and outputting the picture to the controller 190, under the control of the controller 190. Specifically, the camera 170 can include lenses for collecting light, a sensor for converting the light into an electrical signal, and an Image Signal Processor (ISP) for processing the electrical signal input from the sensor into raw data and outputting the raw data to the controller 190. Here, the ISP processes the raw data into a preview image and outputs the preview image to the controller 190, under the control of the controller 190. Then, the controller 190 controls the display unit 110 to display the preview image on the screen. Namely, the preview image is a low resolution image into which the raw data with a high resolution is brought to fit the size of the screen. Further, the ISP processes the raw data into a compressed image (e.g., a JPEG image) and outputs the compressed image to the controller 190, under the control of the controller 190. The controller 190 detects a shutter event (e.g., a user taps a shutter button displayed on the display unit 110) through the touch panel 111 or the key input unit 120 and stores the compressed image in the storage unit 130 in response to the shutter event.

The wired communication unit 180 is connected with an external device (e.g., a charger, a headphone, and the like) through a cable. The wired communication unit 180 includes an ear jack. The ear jack transmits an audio signal received from the audio processing unit 150 to the headphone, and transmits an audio signal received from a microphone included in the headphone to the audio processing unit 150. Meanwhile, the electronic device 100 can be connected with the headphone through the short distance communication module (e.g., a Bluetooth module) of the wireless communication unit 140.

The controller 190 controls an overall operation of the electronic device 100 and signal flows between the internal configurations of the electronic device 100, performs a data processing function, and controls power supply from the battery to the aforementioned configurations.

The controller 190 can include a touch screen controller 191 and an Application Processor (AP) 192.

When an event is transferred from the touch panel 111, the touch screen controller 191 can calculate a touch coordinate and transfer the touch coordinate to the application processor 192. When a hovering event is transferred from the touch panel 111, the touch screen controller 191 recognizes occurrence of the hovering. The touch screen controller 191 can determine a hovering area on the touch screen in response to the hovering and can calculate a hovering coordinate (x, y) in the hovering area. The touch screen controller 191 can transfer the calculated hovering coordinate to, for example, the Application Processor (AP) 192. Here, the hovering coordinate can be based on a pixel unit. For example, in a case where a resolution of the screen is 640 (the number of horizontal pixels) x 480 (the number of vertical pixels), an X-axis coordinate is (0, 640) and a Y-axis coordinate is (0, 480). The AP 192 can determine that a pointing device has hovered over the touch screen, when a hovering coordinate is received from the touch screen controller 191, and can determine that the hovering of the pointing device has been released from the touch screen, when a hovering coordinate is not received from the touch panel 111. Further, the AP 192 can determine that a movement of the pointing device has occurred, when the hovering coordinate is changed and the change of the hovering coordinate exceeds a preset movement threshold value. The AP 192 can calculate a change in a location of the pointing device and a moving speed of the pointing device in response to the movement of the pointing device. Further, the hovering event can include detection information for calculating a depth. For example, the hovering event can include a three dimensional coordinate (x, y, z). Here, z can mean the depth.

When a touch event is transferred from the touch panel 111, the touch screen controller 191 can recognize occurrence of the touch. The touch screen controller 191 can determine a touch area on the touch screen in response to the touch and can calculate a touch coordinate (x, y) in the touch area. The touch screen controller 191 can transfer the calculated touch coordinate to, for example, the AP 192. Here, the touch coordinate can be based on a pixel unit. When the touch coordinate is received from the touch screen controller 191, the AP 192 determines that the pointing device has touched the touch panel 111, and when the touch coordinate is not received from the touch panel 111, the AP 192 determines that the touch of the pointing device has been released from the touch screen. Further, the AP 192 can determine that a movement of the pointing device has occurred, when the touch coordinate is changed and the change of the touch coordinate exceeds a preset movement threshold value. The AP 192 can calculate a change in a location of the pointing device and a moving speed of the pointing device in response to the movement of the pointing device.

The application processor 192 can execute various programs stored in the storage unit 130. Particularly, the application processor 192 can execute the security module 132. Of course, the security module 132 can also be executed by another processor other than the application processor 192, for example, by the CPU.

The controller 190 can further include various processors other than the AP. For example, the controller 190 can also include one or more Central Processing Units (CPUs). Further, the controller 190 can also include a Graphic Processing Unit (GPU). Further, the controller 190 can also further include a communication processor (CP) when the electronic device 100 is provided with the mobile communication module (e.g., a 3-Generation mobile communication module, a 3.5-Generation mobile communication module, 4-Generation mobile communication module, or the like). Further, the controller 190 can also further include an Image Signal Processor (ISP) when the electronic device 100 is provided with the camera. The aforementioned respective processors can be integrated into a single package in which two or more independent cores (e.g., a quad-core) are formed as a single integrated circuit. For example, the application processor 192 can be integrated into a single multi-core processor. The aforementioned processors (e.g., the application process and the ISP) can be a System on Chip (SoC). Further, the aforementioned processors (e.g., the application process and the ISP) can be packaged in a multi-layer structure.

When the screen is switched off, the controller 190 can determine a service status of the electronic device 100 by using one or more of detection information and application execution information. For example, the controller 190 detects detection information (e.g., a voltage change □v) through the sensor unit 160, calculates a sensing value (e.g., acceleration, a pressure, and the like) by using the detection information, determines the service status of the electronic device 100 as "in use" when the calculated sensing value is larger than or equal to a preset threshold value, and sets a security level as a low level according to the determination. The controller 190 determines the service status of the electronic device 100 as "left alone" when the calculated sensing value is smaller than the threshold value, and sets the security level as a high level.

As another example, when the screen is switched off while an execution image of a specific application (e.g., a music playback menu, a video playback menu, a message, a preview image, and the like) is being displayed on the top layer of the screen, the controller 190 determines the service status as "in use". When the screen is switched off while an execution image of another application other than the specific application is being displayed on the top layer of the screen, the controller 190 determines the service status of the electronic device 100 as "service standby" or "left alone".

As another example, when the screen is switched off while music is being reproduced (namely, while audio data is being outputted to the speaker SPK or the headphone), the controller 190 determines the service status of the electronic device 100 as "being carried" or "in use". When the screen is switched off while music is not reproduced, the controller 190 determines the service status of the electronic device 100 as "service standby" or "being left alone".

As another example, when the electronic device 100 is connected with the headphone, the controller 190 determines the service status of the electronic device 100 as "being carried" or "in use". When the electronic device 100 is not connected with the headphone, the controller 190 determines the service status of the electronic device 100 as "service standby" or "left alone".

Although all modifications cannot be listed due to the diversity thereof depending on a convergence trend of a digital device, the electronic device 100 can further include unmentioned configurations such as a Global Positioning System (GPS) module, a vibration motor, an accessory, an ear jack, and the like. Here, the accessory is a component of the electronic device 100 that can be removed from the electronic device 100 and can be, for example, a pen for a touch.

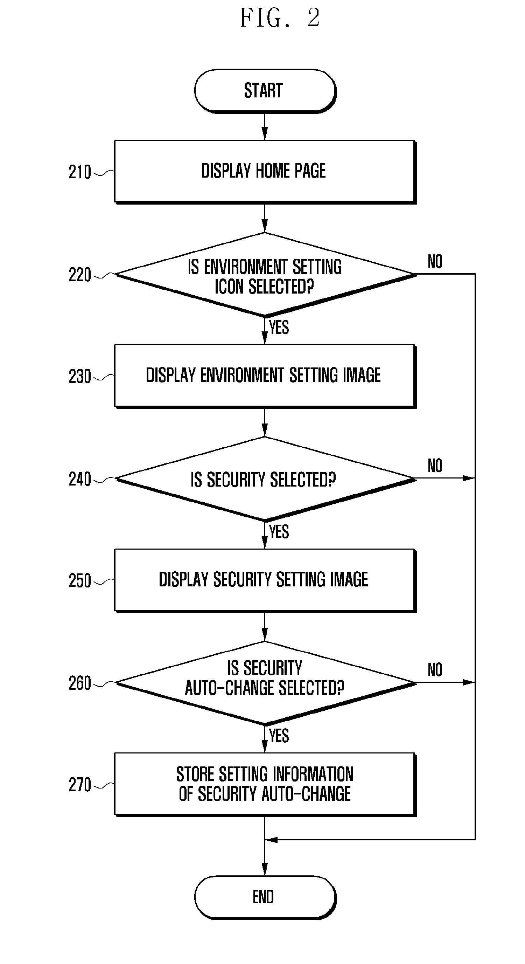

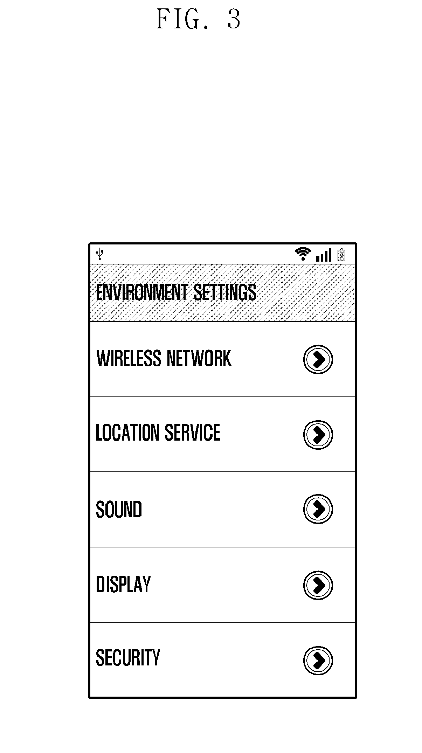

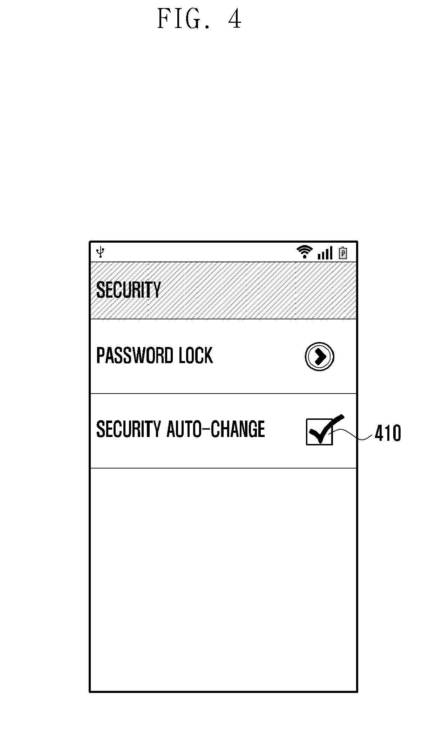

FIG. 2 is a flowchart illustrating an environment setting method according to an embodiment of the present disclosure. FIGS. 3 and 4 are screens illustrating the environment setting method according to the embodiment of the present disclosure.

Referring to FIG. 2, in operation 210, a display unit 110 displays a home image under control of a controller 190. In operation 220, the controller 190 detects a selection of an environment setting icon (e.g., a tap on the environment setting icon) on the home image. In operation 230, the controller 190 controls the display unit 110 to display an environment setting image illustrated in FIG. 3 in response to the selection of the environment setting icon. Referring to FIG. 3, environment settings include items such as wireless network, location service, sound, display, security, and the like.

In operation 240, the controller 190 detects a selection of the security item (e.g., a tap on "security" in FIG. 3) on the environment setting image. In operation 250, the controller 190 controls the display unit 110 to display a security setting image illustrated in FIG. 4 in response to the selection of the security item. In operation 260, the controller 190 detects a selection of Security Auto-change (e.g., a tap on a check box 410 in FIG. 4) on the security setting image. The controller 190 controls the display unit 110 to check and display the checkbox 410 in response to the selection of Security Auto-change. Further, in operation 270, the controller 190 stores setting information of Security Auto-change in a storage unit 130 in response to the selection of Security Auto-change. Meanwhile, when the checked checkbox 410 is deselected, Security Auto-change is released. Namely, release information of Security Auto-change is stored in the storage unit 130.

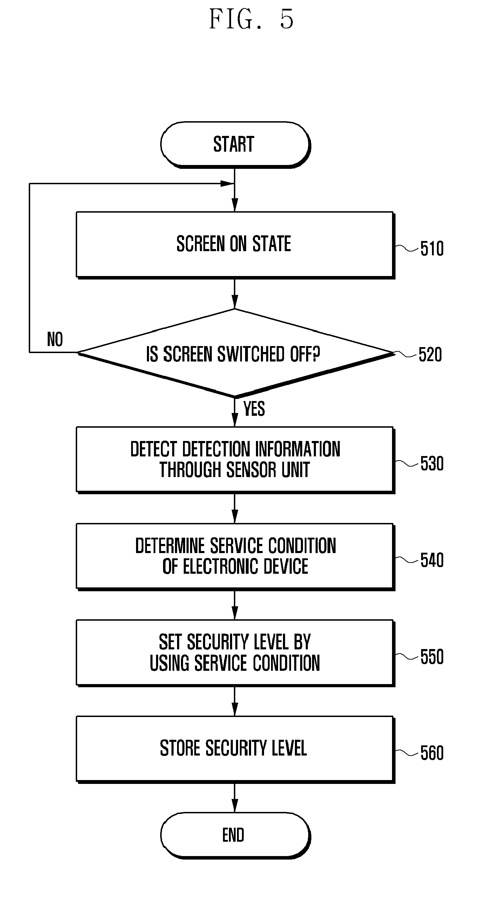

FIG. 5 is a flowchart illustrating a security setting method according to an embodiment of the present disclosure.

Referring to FIG. 5, in operation 510, a screen of an electronic device 100 is in an ON state. Namely, data is being displayed on the screen. In operation 520, a controller 190 determines whether the screen is to be switched off. For example, when a key event for switching off the screen is detected through a key input unit 120, the controller 190 interrupts power supply from a battery to a display unit 110 to thereby switch off the screen. Further, when a touch event is not detected through a touch panel 111 for a predetermined period of time (e.g., for one minute), the controller 190 interrupts power supply from the battery to the display unit 110 to thereby switch off the screen. When the screen is switched off, the controller 190 can operate in a sleep mode. For example, video playback is suspended. Of course, even when the screen is switched off, the controller 190 can operate in an active mode. For example, when a function executed prior to the switching off of the screen corresponds to a voice call, music playback, or the like, the function is continuously executed by the controller 190 even after the screen is switched off.

When the screen is switched off, the controller 190 detects detection information through a sensor unit 160, in operation 530. In operation 540, the controller 190 determines a service status of the electronic device 100 by using the measured sensor values. When a user holds the electronic device 100 with his hand, sensors of the electronic device such as an acceleration sensor, a pressure sensor, a proximity sensor, or the like produce electronic signals in response to the user's motions and transfers the signals to the controller 190. The controller 190 receives and interprets the signals, and determines the service status of the electronic device 100 as "being carried" or "in use" when the calculated sensing value (e.g., pressure) is larger than or equal to a threshold value or the continuous change of the sensing value (e.g., gravity or acceleration). When a user leaves the electronic device 100 alone on a still place without holding it on a hand, the sensor unit 160 will stop generating the fluctuating signal in response to being left. The controller 190 determines the service status of the electronic device 100 as "service standby" or "being left alone" when the detection information is not detected through the sensor unit 160 or when the sensing value calculated by using the detected detection information is smaller than the threshold value. The controller 190 starts to count time at a time point when the service status is determined as "service standby" or "being left alone". The controller 190 changes the status of the electronic device 100 from "being carried" to "being left alone", when the counted time exceeds a preset threshold time interval (e.g., five minutes).

In operation 550, the controller 190 sets a security level by using the determined service status. When the service status is determined as "being carried" or "in use", the security level is set as a low level. When the service status is determined as "being left alone" or "service standby", the security level is determined as an intermediate level. When the service status is determined as "being left alone", the security level is determined as a high level. In operation 560, the controller 190 stores the set security level in a specific area of a storage unit 130, for example, a security level descriptor.

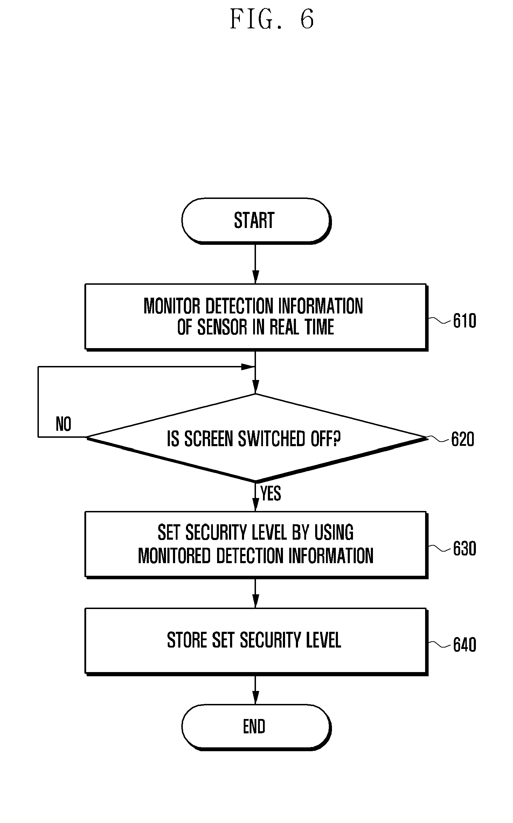

FIG. 6 is a flowchart illustrating a security setting method according to another embodiment of the present disclosure.

Referring to FIG. 6, in operation 610, a controller 190 can monitor, in real time, detection information input from a sensor unit 160. In operation 620, the controller 190 can determine whether a screen is to be switched off. When the screen is switched off, the controller 190 can set a security level by using the monitored detection information, in operation 630. For example, the controller 190 can identify whether a calculated sensing value is larger than or equal to a preset threshold value, by using detection information input from a grip sensor. When it is identified that the sensing value is larger than or equal to the threshold value, the controller 190 can set the security level as a low level. When it is identified that the sensing value is smaller than the threshold value, the controller 190 can also set the security level as another level other than the low level, for example, an intermediate level or a high level.

The controller 190 can identify whether there is a change in the calculated sensing value for a preset threshold time interval (e.g., 5 seconds), by using detection information input from at least one of a gravity sensor and an acceleration sensor. When it is identified that there is no change in the sensing value for the threshold time interval, the controller 190 can set the security level as a high level. When it is identified that there is a change in the sensing value within the threshold time interval, the controller 190 can also set the security level, for example, as an intermediate level or a low level.

In operation 640, the controller 190 can store the set security level as a current security level of the electronic device 100 in a storage unit 130. The security level stored in this way can be updated every time the level thereof varies.

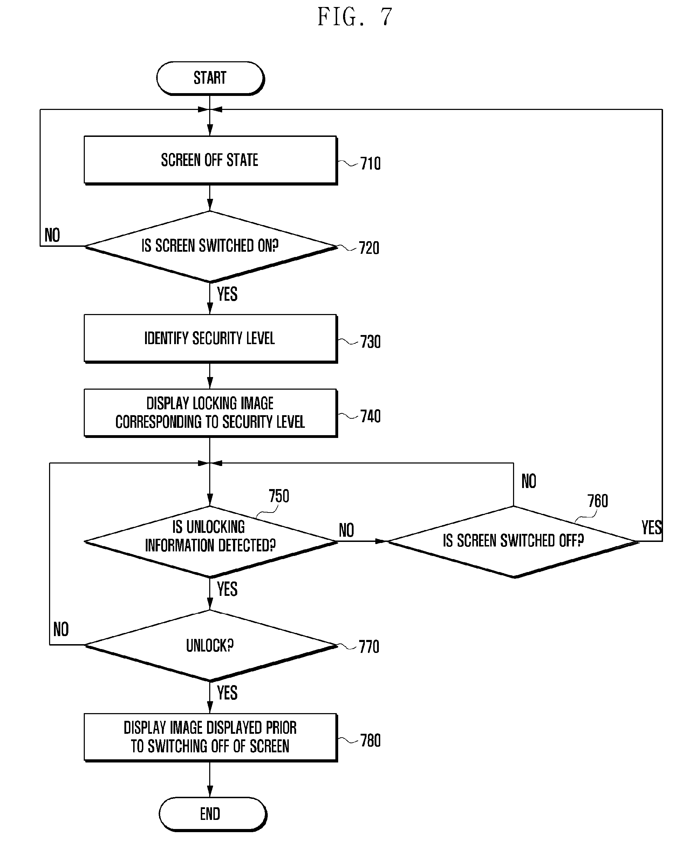

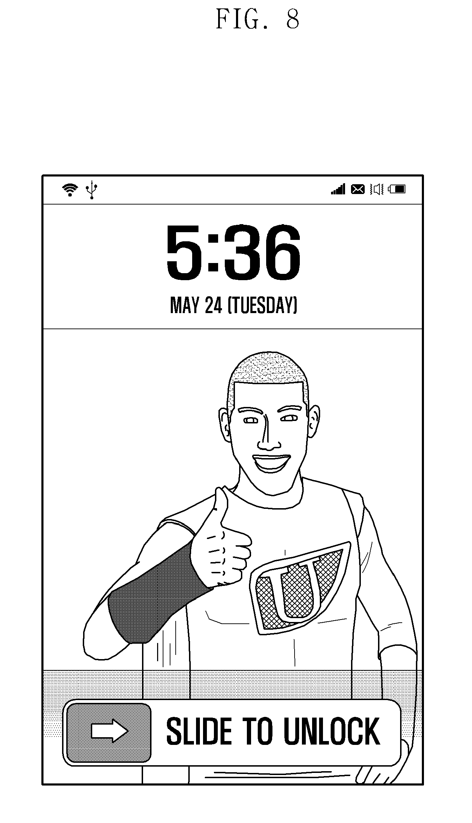

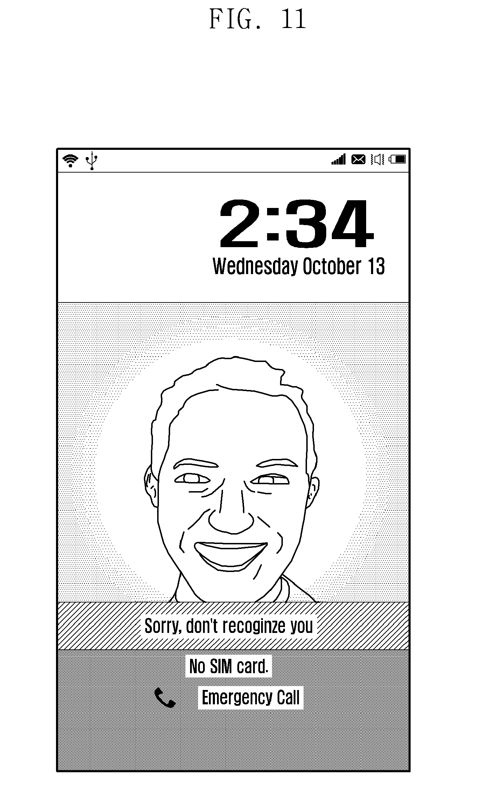

FIG. 7 is a flowchart illustrating an unlocking method according to an embodiment of the present disclosure. FIGS. 8 and 11 are screens illustrating the unlocking method according to the embodiment of the present disclosure.

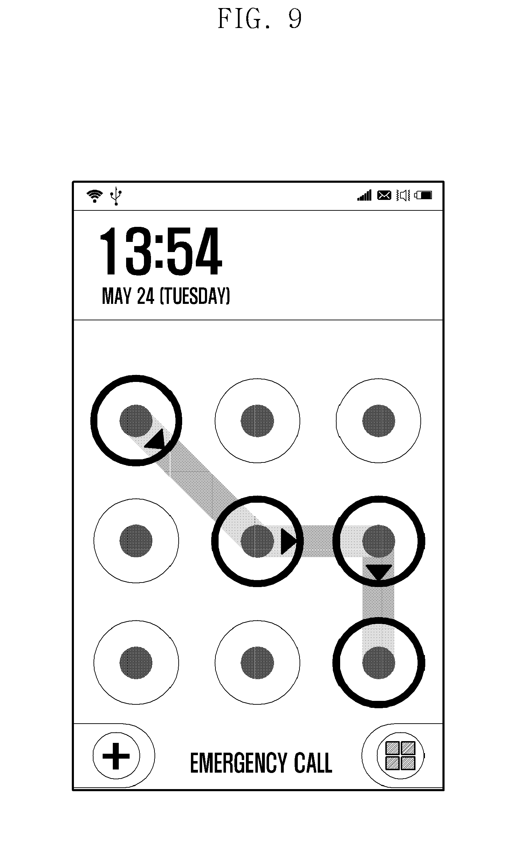

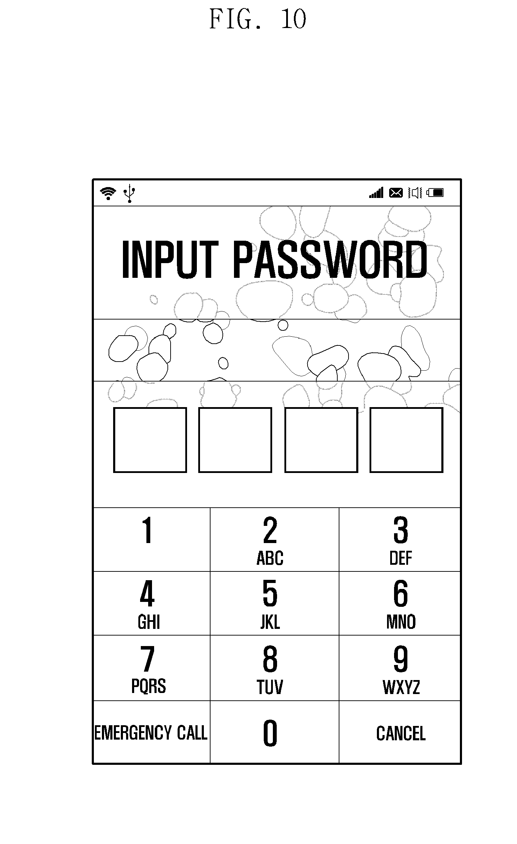

Referring to FIG. 7, in operation 710, a screen of an electronic device 100 is in an OFF state for power saving. Namely, there is no data displayed on the screen. In operation 720, a controller 190 determines whether a key event for switching on the screen occurs. When the key event does not occur, the controller 190 maintains the screen in the OFF state. When the key event occurs, the controller 190 identifies a security level, in operation 730. Namely, the controller 190 reads out a security level recorded in a security level descriptor of a storage unit 130. In operation 740, the controller 190 controls a display unit 110 to display a locking image corresponding to the read security level. For example, when the security level corresponds to a low level, the controller 190 controls the display unit 110 to display a slide locking image as illustrated in FIG. 8. When the security level corresponds to an intermediate level, the controller 190 controls the display unit 110 to display a pattern locking image as illustrated in FIG. 9 or a password locking image as illustrated in FIG. 10. When the security level corresponds to a high level, the controller 190 controls the display unit 110 to display a face locking image or a speech locking image as illustrated in FIG. 11.

In operation 750, the controller 190 determines whether unlocking information (i.e., login information) is detected. The unlocking information is information on a moving direction of a touch input device when the locking image is the slide locking image, information on a trace of the touch input device when the locking image is the pattern locking image, and a text (e.g., "1234") input by a user to the electronic device 100 through a keypad displayed on the screen when the locking image is the password locking image. Further, the unlocking information is audio data received from a microphone MIC when the locking image is the speech locking image, and a video data received from a camera 180 when the locking image is the face locking image.

When the unlocking information is not detected, the process proceeds to operation 760. In operation 760, the controller 190 determines whether a key event for switching off the screen occurs. When the key event does not occur, the process returns to operation 750. When the key event occurs, the controller 190 stops the power supply to the display unit 110 and thus, makes the screen in an OFF state. Namely, when the key event occurs, the process returns to operation 710. Meanwhile, when no touch event occurs for predetermined period of time (e.g., one minute) from a time point when the locking image has been displayed, the process returns to operation 710.

When the unlocking information is detected, the controller 190 determines whether an unlocking operation is to be performed, in operation 770. When the detected unlocking information coincides with the unlocking information stored in the storage unit 130, the controller 190 unlocks the electronic device 100 in operation 780. Namely, the controller 190 controls the display unit 110 to display the image displayed prior to the switching off of the screen.

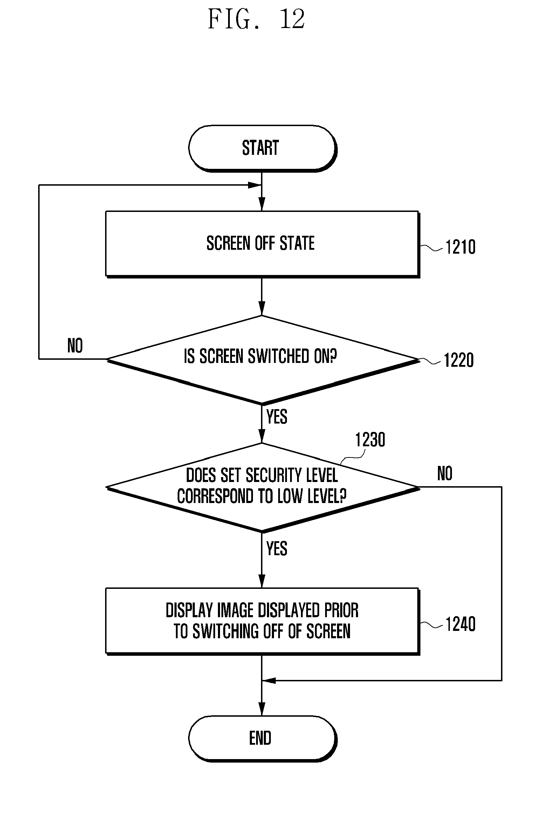

FIG. 12 is a flowchart illustrating an unlocking method according to another embodiment of the present disclosure.

Referring to FIG. 12, in operation 1210, a screen of an electronic device 100 is in an OFF state. In operation 1220, a controller 190 determines whether a key event for switching on the screen occurs. When the key event does not occur, the controller 190 maintains the screen in the OFF state. When the key event occurs, the controller 190 identifies a security level, in operation 1230. When the security level corresponds to a low level as a result of the identification, the controller 190 controls a display unit 110 to display an image displayed prior to the switching off of the screen. Namely, when the security level is the low level, the controller 190 immediately unlocks the electronic device 100 without displaying locking image.

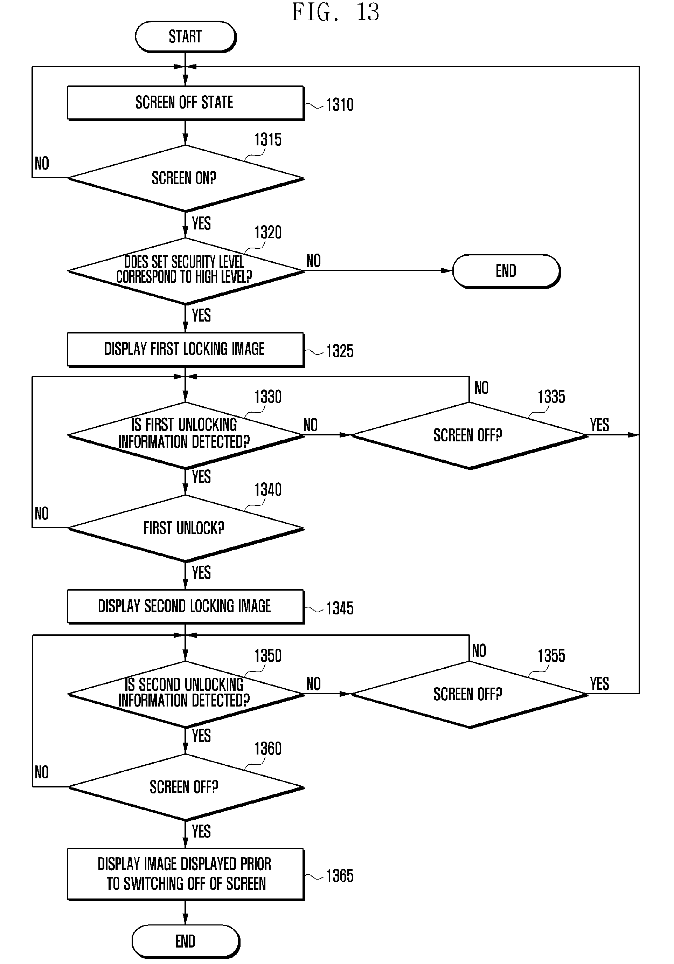

FIG. 13 is a flowchart illustrating an unlocking method according to another embodiment of the present disclosure.

Referring to FIG. 13, in operation 1310, a screen of an electronic device 100 is in an OFF state. In operation 1315, a controller 190 determines whether a key event for switching on the screen occurs. When the key event does not occur, the controller 190 maintains the screen in the OFF state. When the key event occurs, the controller 190 identifies a security level, in operation 1320. When the security level corresponds to a high level as a result of the identification, the controller 190 controls a display unit 110 to display a first locking image (e.g., one of a pattern locking image, a password locking image, a face locking image, and a speech locking image), in operation 1325.

In operation 1330, the controller 190 determines whether first unlocking information is detected. When the first unlocking information is not detected, the process proceeds to operation 1335. In operation 1335, the controller 190 determines whether a key event for switching off the screen occurs. When the key event does not occur, the process returns to operation 1330. When the key event occurs, the process returns to operation 1310. Meanwhile, when no touch event occurs for a predetermined period of time (e.g., one minute) from a time point when the first locking image has been displayed, the process returns to operation 1310.

When the first unlocking information is detected, the controller 190 determines whether a first unlocking operation is to be performed, in operation 1340. When the detected first unlocking information coincides with the first unlocking information stored in a storage unit 130, the controller 190 controls the display unit 110 to display a second locking image (e.g., another of the pattern locking image, the password locking image, the face locking image and the speech locking image), in operation 1345.

In operation 1350, the controller 190 determines whether second unlocking information is detected. When the second unlocking information is not detected, the process proceeds to operation 1355. In operation 1355, the controller 190 determines whether a key event for switching off the screen occurs. When the key event does not occur, the process returns to operation 1350. When the key event occurs, the process returns to operation 1310. Meanwhile, when no touch event occurs for a predetermined period of time (e.g., one minute) from a time point when the second locking image has been displayed, the process returns to operation 1310.

When the first unlocking information is detected, the controller 190 determines whether a second unlocking operation is to be performed, in operation 1360. When the detected second unlocking information coincides with the second unlocking information stored in the storage unit 130, the controller 190 controls the display unit 110 to display an image displayed prior to switching off of the screen, in operation 1365.

The security method according to the present disclosure as described above can be implemented as program commands that can be performed through various computers, and can be recorded in a computer readable recording medium. Here, the recording medium can include a program command, a data file, a data structure, and the like. Further, the program command can be specially designed and configured for the present disclosure, or can be well known to and used by those skilled in the computer software related art. Further, the recording medium can include a magnetic media such as a hard disk, a floppy disk, and a magnetic tape, an optical media such as a Compact Disk-Read Only Memory (CD-ROM) and a Digital Versatile Disk (DVD), a magneto-optical media such as a floptical disk, and a hardware device such as a ROM, a RAM, a flash memory, and the like. Furthermore, the program command can include not only a machine language code made by a compiler but also a high-level language code that can be executed by a computer using an interpreter. The hardware device can be configured to operate as one or more software modules for performance of the present disclosure.

The security method and the electronic device according to the present disclosure are not limited the aforementioned embodiments, and various modified embodiments thereof can be made within the range allowed by the technical spirit of the present disclosure.

Although the present disclosure has been described with an exemplary embodiment, various changes and modifications may be suggested to one skilled in the art. It is intended that the present disclosure encompass such changes and modifications as fall within the scope of the appended claims.

## Claims

1. A method of operating an electronic device having at least one sensor for measuring a physical quantity, the method comprising:
determining a current status of the electronic device using a sensor, wherein the current status is one of a status of being carried and a status of being left; and
adjusting a security level of the electronic device, based on the current status of the electronic device.

2. The method of claim 1, wherein adjusting the security level comprises:
setting a higher security level for the status of being carried; or
setting a lower security level for the status of being left.

3. The method of claim 1, wherein the at least one sensor comprises at least one of a grip sensor and a pressure sensor.

4. The method of claim 2, wherein the status of being left is selected when the measured physical quantity has not been changed for a threshold time.

5. The method of claim 1, wherein the at least one sensor comprises at least one of a gravity sensor and an acceleration sensor.

6. The method of claim 2, wherein the status of being carried is selected when the measured physical quantity has been continuously changed.

7. The method of claim 2, wherein once the current status is set to be the status of being left, the security level maintains to be the higher security level until a user releases the higher security level.

8. The method of claim 2, further comprising:
for the higher security level, providing a plurality of lock-screens having different passwords in a sequence after each lock-screen is successfully unlocked.

9. The method of claim 8, wherein the plurality of lock-screens requires different formats of the passwords.

10. The method of claim 2, further comprising:
for the lower security level, displaying a prior screen before being locked when a single lock-screen is successfully unlocked.

11. An electronic device comprising:
at least one sensor for measuring a physical quantity; and
a processor configured to:
determine a security level of the electronic device, the security level comprising one of a high security level and a low security level; and
adjusting a security level of the electronic device, based on the current status of the electronic device.

12. The electronic device of claim 11, wherein the processor is further configure to:
setting a higher security level for the status of being carried; or
setting a lower security level for the status of being left.

13. The electronic device of claim 11, wherein the at least one sensor comprises at least one of a grip sensor and a pressure sensor.

14. The electronic device of claim 11, wherein the at least one sensor comprises at least one of a gravity sensor and an acceleration sensor.

15. The electronic device of claim 11, wherein the status of being carried is selected when the measured physical quantity has been continuously changed.
